# FASCICULE DE BREVET EUROPEEN

(11) **EP 3 564 164 B1**
(45) Date de publication et mention de la délivrance du brevet: **05.08.2020**
(21) Numéro de dépôt: 19166595.9
(22) Date de dépôt: 01.04.2019
(51) Int. Cl.: B65G 1/137, B65G 11/06

(54) **CELLULE DE STOCKAGE/DESTOCKAGE POUR PLATE-FORME LOGISTIQUE DE TRAITEMENT DE COLIS**
ZELLE ZUM EIN-/AUSLAGERN FÜR LOGISTIKPLATTFORM ZUR VERARBEITUNG VON PACKSTÜCKEN
STORAGE/PICKING CELL FOR PARCEL HANDLING LOGISTICS PLATFORM

(30) Priorité: 04.05.2018 FR 1853870
(43) Date de publication de la demande: 06.11.2019
(73) Titulaire: Solystic, 92220 Bagneux (FR)
(72) Inventeur: MIETTE, Emmanuel, 95210 SAINT GRATIEN (FR); CHIROL, Luc, 75016 Paris (FR)
(74) Mandataire: Prugneau, Philippe

(56) Documents cités:
- EP-A1- 2 949 605
- FR-A1- 2 996 788

## Description

### Domaine technique

L'invention concerne une cellule de stockage/déstockage pour plate-forme logistique de traitement de colis.

### Technique antérieure

On connaît déjà des plates-formes logistiques dans lesquelles des articles ou colis à livrer à domicile par exemple, sont acheminés en vrac avec des camions de transport jusqu'à un quai ou ces articles ou colis sont déchargés. Les articles ou colis sont ensuite réorganisés de manière à être réexpédiés individuellement vers un destinataire final.

Une plate-forme logistique peut mettre à profit plusieurs étages de stockage et utiliser des véhicules autonomes commandés par un système centralisé pour déplacer lesdits articles ou colis en son sein.

Ainsi, la demande de brevet US 2009/0074545 décrit un entrepôt dans lequel des véhicules autonomes déplacent des articles de manière à desservir des emplacements de stockage situés le long d'un réseau de voies de circulation s'étendant sur plusieurs étages verticaux, et où chaque étage comprend des allées de circulation entre deux rangées d'emplacements de stockage.

Selon cette demande de brevet, les articles à déplacer peuvent être transportés d'un niveau vertical à l'autre par des convoyeurs verticaux, et les véhicules autonomes peuvent transporter les articles à l'intérieur de chaque niveau, entre les emplacements de stockages et des points de collectes situés à l'écart des rangées d'emplacement de stockage. Le document EP2949605 A1 décrit une cellule de stockage /déstockage selon le préambule de la revendication 1.

### Exposé de l'invention

L'architecture de plates-formes logistiques multi-niveaux reposant sur l'utilisation de robots-navettes pour déplacer des colis au sein d'un même niveau peut encore être largement améliorée afin d'utiliser plus efficacement lesdits robots-navettes et d'optimiser les opérations de stockage/déstockage.

A cet effet, l'invention a pour objet une cellule de stockage/déstockage pour plate-forme logistique de traitement de colis en vue de leur distribution, comprenant un plancher en hauteur et des robots-navettes autonomes en déplacement qui déplacent des colis entrant pour les positionner à des emplacements de stockage sous le contrôle à distance d'une unité de contrôle-commande, cette unité étant en outre conçue pour commander lesdits robots-navettes de façon à déstocker en séquence lesdits colis des emplacements, dans laquelle lesdits emplacements de stockage sont répartis sur ledit plancher de manière à former, d'une part, deux rangées d'emplacements de stockage se faisant face parallèlement l'une à l'autre le long d'une direction longitudinale et d'autre part, quatre demi-rangées d'emplacements de stockage disposées dos-à-dos deux à deux et s'étendant deux à deux l'une dans le prolongement de l'autre dans ladite direction longitudinale entre lesdites deux rangées d'emplacements de stockage, lesdites rangées et demi-rangées d'emplacements définissant entre elles des allées de circulation sur ledit plancher pour les robots-navettes lors du stockage et du déstockage des colis, et dans laquelle une trémie de circulation verticale des colis est ouverte dans le plancher entre deux demi-rangées dos à dos et les deux autres demi-rangées dos à dos, cette trémie étant conçue pour être traversée verticalement par lesdits colis quand ils sont déchargés en séquence dans celle-ci avec lesdits robots-navettes sous la commande de ladite unité lors du déstockage, la cellule de stockage-déstockage comprenant en outre des chariots-gigognes attelables chacun à un robot-navette et ayant chacun un plateau apte à porter un colis, ces chariots-gigognes ayant des hauteurs et des largeurs différentes de manière à être encastrables les uns dans les autres sur un même emplacement de stockage, et comprenant en outre au bord de ladite trémie un dispositif de déchargement automatique comprenant au moins un bras de raclage apte à racler le plateau d'un chariot-gigogne portant un colis pour faire chuter ce colis dans la trémie sous l'effet d'un déplacement relatif du chariot et du bras de raclage.

Cet agencement de cellule avec la trémie utilisée comme point de collecte contribue à limiter la distance moyenne entre celle-ci et les emplacements de stockage, ce qui réduit la distance moyenne de parcours des robots-navettes par colis déstocké au cours du déstockage.

En particulier, une trémie est ici un espace réservé dans un plancher pour une circulation verticale des colis, se matérialisant par une ouverture dans ce plancher et apte à laisser circuler les colis verticalement, éventuellement au moyen d'un convoyeur vertical traversant la trémie.

De ce fait, tant l'efficacité dans l'utilisation des robots-navettes que la vitesse de déstockage des articles ou colis sont augmentées.

La cellule de stockage selon l'invention peut encore présenter avantageusement les particularités suivantes :
- elle peut comprendre plusieurs étages de plancher, les trémies desdits planchers étant desservies par un même convoyeur vertical ;
- ledit convoyeur vertical peut être un convoyeur hélicoïdal ; et
- ledit convoyeur vertical peut être un convoyeur gravitaire.

Ainsi, une cellule de stockage/déstockage selon l'invention peut s'étendre en hauteur de manière à augmenter sa capacité sans augmenter son emprise au sol.

De plus, une telle cellule ne nécessite pas d'infrastructure complexe ou requérant une maintenance importante pour le déstockage des colis, ce qui garantit une forte disponibilité et un coût d'exploitation bas.

L'invention peut s'étendre à une plate-forme logistique de traitement de colis comprenant au moins une cellule telle que définie plus haut et au sol, sous ladite trémie, un transporteur de colis apte à transporter en série lesdits colis, provenant de ladite trémie, vers un véhicule de transport stationné au sol.

Une telle plate-forme profite avantageusement du fait que les véhicules de transport au sol peuvent être amenés sous une cellule de stockage/déstockage, au plus près de la trémie par où les colis déstockés descendent, ce qui réduit le besoin en infrastructure de convoyage des colis, simplifie et minimise le trajet à faire effectuer aux colis, et augmente les vitesses de déstockage de la cellule et de chargement du véhicule de transport.

De plus, en chargeant les véhicules de transport des colis sous la cellule de stockage/déstockage, on limite fortement l'emprise au sol globale de la plate-forme.

La plate-forme logistique selon l'invention peut encore présenter les particularités suivantes :
- elle peut comprendre plusieurs cellules adjacentes avec un plancher commun et plusieurs trémies dans le plancher commun, et au sol sous lesdites trémies plusieurs transporteurs de colis aptes à servir plusieurs véhicules de transport stationnés au sol ; et
- elle peut comprendre une entrée d'alimentation en colis avec un moyen d'identification de chaque colis pour fournir une information d'adresse de distribution postale, et ladite unité de contrôle/commande peut être agencée pour, à partir des informations d'adresse des colis stockés dans les emplacements de stockage d'une cellule, commander lesdits robots-navettes de manière à décharger dans ladite trémie de la cellule lesdits colis suivant un certain ordre de distribution postale des colis qui correspond à un ordre de chargement des colis dans le ou les véhicules de transport.

De cette manière, une plate-forme logistique selon l'invention peut utiliser une surface au sol limitée de manière extrêmement efficace, mais peut également s'étendre très aisément tant horizontalement que verticalement pour adapter sa capacité en traitement de colis.

Une telle plate-forme est particulièrement apte à une installation urbaine ou périurbaine pour la distribution de colis individuel à leurs destinataires finaux, permettant de pousser l'automatisation de la préparation de tournées de livraison, ainsi qu'une préparation aisée et rapide de vagues successives de livraison.

### Présentation sommaire des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
- la figure 1A illustre une vue de haut d'une cellule de stockage/déstockage selon l'invention ;
- la figure 1B illustre le fonctionnement d'une plate-forme logistique comprenant sur un niveau vertical des cellules illustrées par la figure 1A juxtaposées horizontalement ;
- la figure 2A est une vue schématique partielle de la plate-forme logistique de la figure 1B ;
- la figure 2B est une vue schématique partielle de la plate-forme de la figure 2A avec un niveau en mezzanine comprenant des cellules juxtaposées comme illustré par la figure 1B ;
- la figure 3A illustre une vue en perspective d'une cellule selon l'invention ayant au moins deux niveaux verticaux ;
- la figure 3B illustre des chariots-gigognes ; et
- les figure 3C et 3D illustrent respectivement une vue de haut et une vue de côté d'un dispositif de déchargement de colis adapté aux chariots-gigognes de la figure 3B.

### Description d'un mode de réalisation

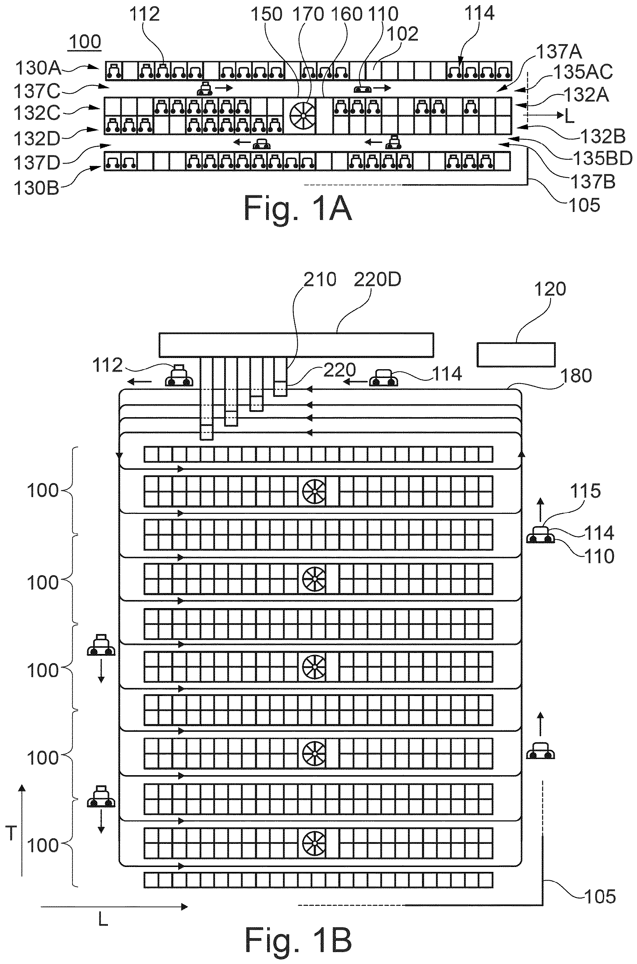

Un mode particulier de réalisation de l'invention consiste en une plate-forme logistique de traitement de colis décrite par les figures 1A à 3D, et dont l'architecture est basée sur des cellules de stockage/déstockage des colis situées à des niveaux en mezzanine au-dessus d'un sol sur lequel circulent des véhicules de livraison tels que camions, camionnettes.

La figure 1A illustre une cellule de stockage/déstockage 100 selon l'invention avec un plancher 105 en hauteur sur lequel se déplacent des robots-navettes 110 autonomes en déplacement et capables de déplacer des colis 112 entrants pour les positionner à des emplacements de stockage 102 sous le contrôle à distance d'une unité de contrôle-commande 120, en s'attelant à des chariots-gigognes 114 portant ces colis sur un plateau 115 et en les tractant de manière à les positionner aux emplacements de stockage 102.

Ces emplacements de stockage 102 sont répartis sur chaque plancher 105 de manière à former, d'une part, deux rangées 130A et 130B d'emplacements de stockage 102 se faisant face parallèlement l'une à l'autre le long d'une direction longitudinale L, et d'autre part, quatre demi-rangées 132A, 132B, 132C et 132D d'emplacements de stockage 102 disposées dos-à-dos deux à deux et s'étendant deux à deux l'une dans le prolongement de l'autre dans la direction longitudinale L entre les deux rangées 130A et 130B d'emplacements de stockage, les demi-rangées pouvant contenir sensiblement un même nombre de colis.

Ainsi, comme illustré par la figure 1A, d'une part les demi-rangées 132A et 132B sont dos-à-dos et les demi-rangées 132C et 132D sont également dos-à-dos et, d'autre part, les demi-rangées 132A et 132C s'étendent dans le prolongement l'une de l'autre et les demi-rangées 132B et 132D s'étendent également dans le prolongement l'une de l'autre dans la direction longitudinale L.

Ces rangées et demi-rangées d'emplacements définissent entre elles quatre demi-allées 137A, 137B, 137C et 137D chacune formée respectivement devant l'une des quatre demi-rangée 132A, 132B, 132C et 132D, les deux demi-allées 137A et 137C et les deux demi-allées 137B et 137D formées dans le prolongement l'une de l'autre formant respectivement les allées 135AC et 135BD.

Selon l'invention, une trémie 150 est ouverte dans le plancher entre les deux demi-rangées 134A et 134B dos à dos d'un côté et les deux autres demi-rangées 134C et 134D dos à dos d'un côté opposé, cette trémie 150 étant conçue pour être traversée par lesdits colis 112 quand ils sont déchargés en séquence dans celle-ci sous la commande de l'unité de contrôle-commande 120 au cours d'une opération de déstockage de la cellule 100.

Durant le déstockage de la cellule, les robots-navettes opèrent des allées-venues entre les emplacements de stockage 102 et la trémie 150, cette dernière jouant le rôle d'un point de collecte et de transfert, permettant de transférer les colis à partir de la cellule jusqu'à une station de traitement ultérieur située à un autre niveau vertical, par exemple une zone de chargement des colis déstockés dans un véhicule de livraison.

La disposition centrale de la trémie par rapport aux demi-allées d'emplacements de stockage permet de minimiser de façon extrêmement efficace les distances de déplacement des robots-navettes.

Ainsi, pour le déstockage, à chaque demi-allée peut être assigné un robot-navette qui se déplacera exclusivement dans cette demi-allée, ce qui permet de limiter son déplacement moyen par colis amené d'une position de stockage à la trémie, ainsi que d'accélérer le déstockage de la cellule tout en optimisant l'usage dudit robot-navette.

La cellule selon l'invention est donc avantageuse par rapport à une architecture de plate-forme logistique où les robots-navettes ont à amener chaque colis à déstocker à un point de collecte situé à l'écart des allées de circulation entre les rangées de stockage.

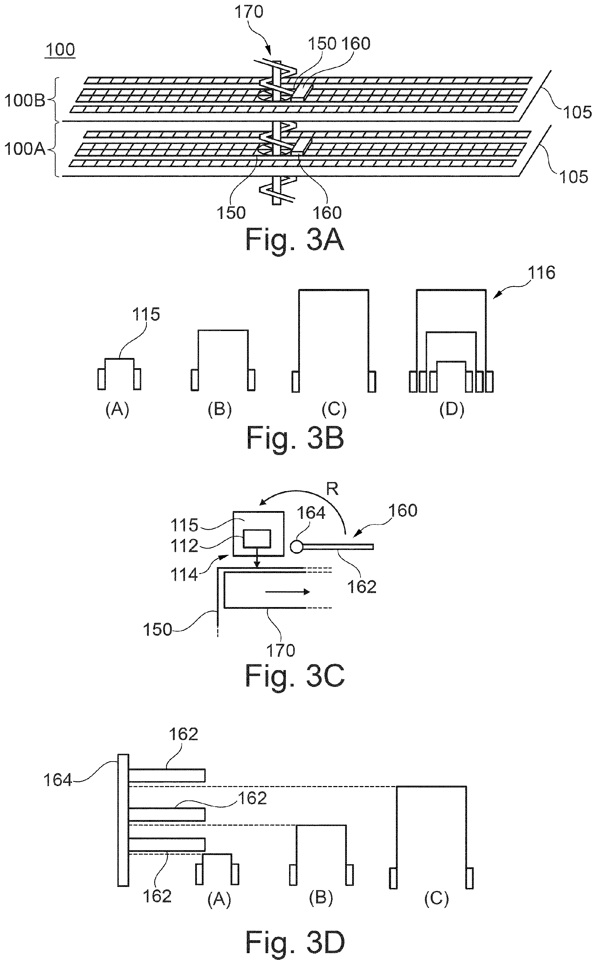

Comme illustré par la figure 3A, la cellule de stockage/déstockage selon l'invention peut comprendre plusieurs niveaux 100A et 100B avec chacun un étage de plancher 105, chaque plancher comprenant une trémie 150, les trémies pouvant être en coïncidence verticale et être desservies par un convoyeur vertical 170 commun, par exemple un convoyeur hélicoïdal et/ou gravitaire.

Dans la situation où la trémie n'est utilisée que pour transférer des colis selon une direction verticale descendante, il est possible utiliser un convoyeur gravitaire, ce qui réduit les coûts d'installation et d'exploitation de la cellule.

Dans ce mode de réalisation, les colis 112 sont déplacés dans la cellule en étant portés chacun par un plateau 115 de l'un des chariots-gigognes 114 tracté par un robot-navette auquel il est attelé.

Les chariots-gigognes peuvent être par exemple ceux de la demande de brevet FR 2 996 788.

Comme illustré par la figure 3B, dans laquelle trois configurations A, B et C de chariots-gigognes 114 sont montrées, les chariots-gigognes 114 ont des hauteurs et des largeurs différentes de manière à être encastrables les uns dans les autres sur un même emplacement de stockage, comme dans l'encastrement 116 de chariots-gigognes selon la configuration D de la figure 3B, où trois chariots portant chacun un colis sont encastrés les uns dans les autres.

Lors du déstockage de la cellule, les chariots-gigognes portant un colis à un emplacement de stockage sont récupérés par les robots-navettes puis présentés, selon une séquence particulière déterminée par l'unité de contrôle-commande, à un dispositif 160 de déchargement automatique qui est situé au bord de la trémie 150 et qui fait chuter les colis des chariots dans cette dernière, sur le convoyeur vertical 170, comme illustré en figure 3C.

Plus précisément, le dispositif de déchargement 160 est agencé de manière à racler les plateaux des chariots pour faire chuter les colis dans la trémie 150 sous l'effet d'un déplacement relatif du chariot 114 et du bras de raclage, en prenant en compte les différentes hauteurs de plateau des chariots-gigognes.

Un tel dispositif de déchargement 160 comprend par exemple trois bras de raclage 162, chacun destiné à racler respectivement le plateau 115 d'un chariot-gigogne ayant l'une des trois configurations A, B et C par rotation R autour d'un support 164, comme illustré par la vue de haut de la figure 3C, le dispositif de déchargement étant contrôlé par l'unité de contrôle-commande de manière à utiliser le bras adapté au chariot qui lui est présenté.

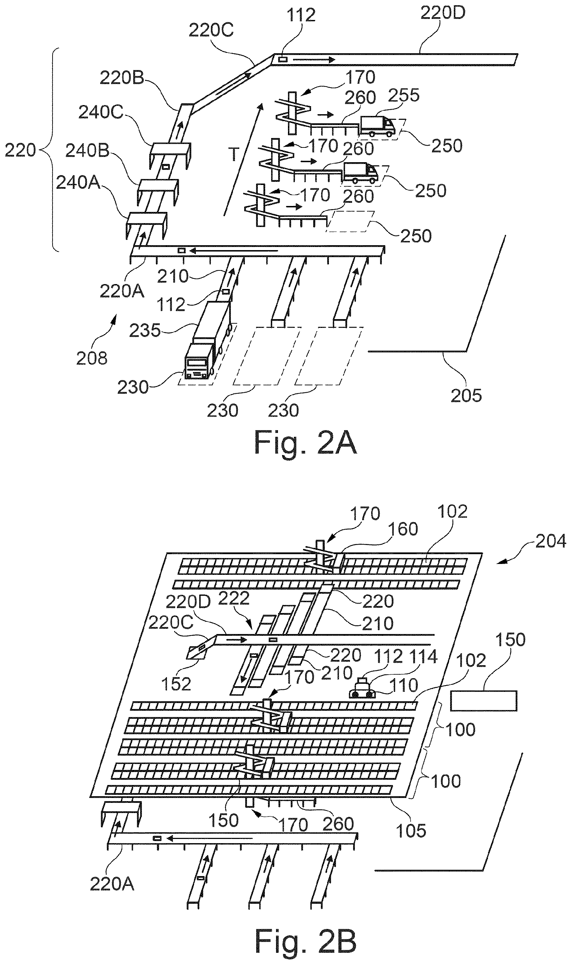

Les figures 2A et 2B illustrent une vue partielle d'une plate-forme logistique 200 de traitement de colis intégrant une pluralité de cellules de stockage/déstockage 100 adjacentes les unes aux autres et partageant un plancher 105 commun en hauteur par rapport au niveau du sol 205.

Une telle plate-forme logistique comprend au moins une cellule 100 de stockage/déstockage, avec au sol 205, sous la trémie 150 de la cellule, un transporteur 260 de colis apte à transporter en série les colis provenant de ladite trémie vers un véhicule de transport 255 stationné au sol 205 sur une place de stationnement 250 adjacente à la partie basse du convoyeur vertical desservant la trémie de la cellule. Ce transporteur peut être un convoyeur horizontal à tapis ou encore à rouleaux.

Comme illustré par les figures 1B et 2A, lorsque la plate-forme comprend plusieurs cellules adjacentes, celles-ci sont de préférence orientées et juxtaposées de manière à aligner leurs trémies 150, leurs convoyeurs verticaux 160 et les places de stationnement 250 correspondantes selon une direction T transversale à la direction longitudinale L le long de laquelle s'étendent les cellules, ceci afin de rationaliser l'utilisation de l'espace et simplifier les manœuvres des véhicules de transport 255.

Cette plate-forme logistique comprend ici une entrée d'alimentation 208 constituée des convoyeurs 210 de déchargement de camions 235 au niveau de places de stationnement 230 de déchargement situées au niveau du sol 205 et du système de convoyage 220 agencé pour convoyer des colis 112 depuis les camions 235 jusqu'à un niveau haut 204 en mezzanine comprenant lesdites cellules 100 de stockage/déstockage.

Plus précisément, les convoyeurs 210 peuvent être des convoyeurs télescopiques à tapis par exemple agencés en parallèle pour convoyer des colis depuis des remorques de camions 235 jusqu'au système de convoyage 220 composés de sections de convoyage 220A, 220B, 220C et 220D transportant successivement les colis dans cet ordre.

La section de convoyage 220A récupère les colis arrivant déchargés sur les convoyeurs 210.

La section de convoyage 220B fait passer les colis à travers un système d'égrenage 240A pour les répartir sur le convoyeur, un système de pesée et/ou de mesure des dimensions des colis 240B et un système d'identification 240C pour fournir à l'unité de contrôle-commande 120 des informations d'adresse de distribution postale des colis, celle-ci étant agencé de manière à gérer la manutention des colis, par exemple de façon analogue au procédé décrit dans la demande de brevet FR 2 996 788.

En réponse à ces informations d'adresse, l'unité de contrôle-commande détermine un emplacement de stockage 102 approprié à chaque colis 112, de manière à ce que des colis devant être distribués dans une même zone géographique et/ou au cours d'une même tournée de distribution soient stockés par exemple dans une même cellule 100 de stockage/déstockage.

La section de convoyage 220C fait passer les colis au niveau haut 204, et peut être constituée d'un convoyeur incliné passant à travers une trémie 152 dans le plancher 105 du niveau haut 204.

Une seule section de convoyage 220C est illustrée ici, mais à chaque niveau de plancher 105 d'une cellule peut correspondre une section de convoyage 220C associée, les colis arrivant étant orientés vers la section de convoyage 220C correspondant aux emplacements de stockage déterminés par l'unité de contrôle-commande 120.

La section de convoyage 220D déplace les colis au sein du niveau haut 204 et comprend un système d'aiguillage 222 aiguillant les colis vers des convoyeurs 210 de distribution des colis qui distribuent les colis à des stations de chargement 220 agencées de manière à charger les colis arrivant des convoyeurs 210 sur les chariots-gigognes 114, sur commande de l'unité de contrôle-commande.

Au cours d'une opération de stockage des cellules de stockage/déstockage, les robots-navettes se déplacent le long de plusieurs circuits 180 en boucle en empruntant les allées 135AC et 135BD de circulation des cellules selon un sens unique, comme indiqué par les flèches, de manière à présenter des chariots-gigognes non chargés aux stations de chargement 220 et à les disposer, une fois chargés, aux emplacements de stockage 102.

L'unité de contrôle-commande 120 est agencée pour, au cours d'une opération de déstockage, commander les robots-navettes sur la base des informations d'adresse de distribution postale de manière à décharger dans les trémies 150 les colis 102 suivant un certain ordre de distribution postale qui correspond à un ordre de chargement des colis dans un ou plusieurs véhicules de transport 255, lesquels colis étant convoyés verticalement par les convoyeurs verticaux 170 de manière à ramener les colis au niveau du sol où ils sont présentés auxdits véhicules de transports 255 via les transporteurs 260.

Cette manutention est extrêmement efficace, tous les colis destinés à une zone géographique donnée étant stockés dans une même cellule et déstockés via un même convoyeur vertical pour les présenter directement à un véhicule de transport desservant ladite zone géographique, par exemple selon une séquence inverse à celle de la livraison pour faciliter le chargement du véhicule.

Il est entendu que la cellule de stockage/déstockage selon l'invention peut s'appliquer à des articles différents de colis postaux, comme des bagages dans un centre aéroportuaire.

Par ailleurs, le système 240C peut être un lecteur de codes d'identification de colis, comme un codes à barres, qui par association dans une base de données fournit l'information d'adresse à partir de la reconnaissance du code d'identification du colis.

Il va de soi que la présente invention ne saurait être limitée au mode de réalisation exposé plus haut, susceptible de subir des modifications sans pour autant sortir du cadre de l'invention.

## Revendications

1. Cellule (100) de stockage/déstockage pour plate-forme logistique de traitement de colis en vue de leur distribution, comprenant un plancher (105) en hauteur et des robots-navettes (110) autonomes en déplacement qui déplacent des colis (112) entrant pour les positionner à des emplacements de stockage (102) sous le contrôle à distance d'une unité de contrôle-commande (120), cette unité étant en outre conçue pour commander lesdits robots-navettes de façon à déstocker en séquence lesdits colis (112) des emplacements, dans laquelle lesdits emplacements de stockage (102) sont répartis sur ledit plancher (105) de manière à former, d'une part, deux rangées (130A, 130B) d'emplacements de stockage (102) se faisant face parallèlement l'une à l'autre le long d'une direction longitudinale (L) et d'autre part, quatre demi-rangées (132A, 132B, 132C, 132D) d'emplacements de stockage disposées dos-à-dos deux à deux et s'étendant deux à deux l'une dans le prolongement de l'autre dans ladite direction longitudinale entre lesdites deux rangées (130A, 130B) d'emplacements de stockage, lesdites rangées et demi-rangées d'emplacements définissant entre elles des allées (135AC, 135BD) de circulation sur ledit plancher (105) pour les robots-navettes lors du stockage et du déstockage des colis, et dans laquelle une trémie (150) de circulation verticale des colis est ouverte dans le plancher (105) entre deux demi-rangées (132A, 132B) dos à dos et les deux autres demi-rangées (132C, 132D) dos à dos, cette trémie étant conçue pour être traversée verticalement par lesdits colis quand ils sont déchargés en séquence dans celle-ci avec lesdits robots-navettes sous la commande de ladite unité lors du déstockage, la cellule de stockage-déstockage étant **caractérisée en ce qu'**elle comprend en outre des chariots-gigognes (114) attelables chacun à un robot-navette (110) et ayant chacun un plateau (115) apte à porter un colis, ces chariots-gigognes ayant des hauteurs et des largeurs différentes de manière à être encastrables les uns dans les autres sur un même emplacement de stockage (102), et **en ce qu'**elle comprend en outre au bord de ladite trémie (150) un dispositif (160) de déchargement automatique comprenant au moins un bras (162) de raclage apte à racler le plateau (115) d'un chariot-gigogne (114) portant un colis (102) pour faire chuter ce colis dans la trémie (150) sous l'effet d'un déplacement relatif du chariot et du bras de raclage.

2. La cellule de stockage/déstockage selon la revendication 1, **caractérisée en ce qu'**elle comprend plusieurs étages de plancher (105), les trémies (150) desdits planchers étant desservies par un même convoyeur vertical (170) .

3. La cellule de stockage/déstockage selon la revendication 2, **caractérisée en ce que** ledit convoyeur vertical (170) est un convoyeur hélicoïdal.

4. La cellule de stockage/déstockage selon l'une des revendications 2 ou 3, **caractérisée en ce que** ledit convoyeur vertical (170) est un convoyeur gravitaire.

5. Plate-forme logistique (200) de traitement de colis **caractérisée en ce qu'elle** comprend au moins une cellule (100) selon l'une des revendications précédentes et au sol (205), sous ladite trémie (150), un transporteur (260) de colis (102) apte à transporter en série lesdits colis, provenant de ladite trémie, vers un véhicule de transport (255) stationné au sol (205).

6. La plate-forme logistique selon la revendication 5, **caractérisée en ce qu'**elle comprend plusieurs cellules (100) adjacentes avec un plancher (105) commun et plusieurs trémies (150) dans le plancher commun, et au sol, sous lesdites trémies, plusieurs transporteurs (260) de colis aptes à servir plusieurs véhicules de transport (155) stationnés au sol.

7. La plateforme logistique selon la revendication 5 ou 6, **caractérisée en ce qu'**elle comprend une entrée d'alimentation (208) en colis (102) avec un moyen d'identification (140C) de chaque colis pour fournir une information d'adresse de distribution postale, et **en ce que** ladite unité de contrôle/commande (120) est agencée pour, à partir des informations d'adresse des colis (102) stockés dans les emplacements de stockage (102) d'une cellule (100), commander lesdits robots-navettes (110) de manière à décharger dans ladite trémie (150) de la cellule lesdits colis suivant un certain ordre de distribution postale des colis qui correspond à un ordre de chargement des colis dans le ou les véhicules de transport (155).

## Patentansprüche

1. Zelle (100) zum Einlagern/Auslagern für Logistikplattform zur Verarbeitung von Packstücken in Hinblick auf ihre Verteilung, umfassend einen hochstehenden Boden (105) und autonom verlagerbare Zuführroboter (110), die eingehende Packstücke (112) verlagern, um sie an Lagerplätzen (102) unter der Fernsteuerung einer Regel-/Steuereinheit (120) zu positionieren, wobei diese Einheit ferner ausgebildet ist, um die Zuführroboter derart zu steuern, dass sie in Reihenfolge die Packstücke (112) von den Plätzen auslagern, bei der die Lagerplätze (102) auf dem Boden (105) derart verteilt sind, dass sie zum Einen zwei Reihen (130A, 130B) von Lagerplätzen (102), die sich parallel zueinander entlang einer Längsrichtung (L) gegenüber stehen, und zum Anderen vier halbe Reihen (132A, 132B, 132C, 132D) von Lagerplätzen, die paarweise Rücken an Rücken angeordnet sind und sich paarweise die eine in der Verlängerung der anderen in dieser Längsrichtung zwischen den zwei Reihen (130A, 130B) von Lagerplätzen erstrecken, bilden, wobei die Reihen und halben Reihen von Plätzen zwischen einander Alleen (135AC, 135BD) für die Zirkulation auf dem Boden (105) für die Zuführroboter während des Einlagerns und Auslagerns der Packstücke definieren, und bei der ein Geschossdurchbruch (150) für das vertikale Zirkulieren der Packstücke in dem Boden (105) zwischen zwei Rücken an Rücken angeordneten halben Reihen (132A, 132B) und den anderen zwei Rücken an Rücken angeordneten halben Reihen (132C, 132D) ausgespart ist, wobei dieser Geschossdurchbruch ausgebildet ist, um vertikal von den Packstücken durchlaufen zu werden, wenn diese mit den Zuführrobotern unter der Steuerung der Einheit beim Auslagern in Reihenfolge in jenen entladen werden, wobei die Zelle zum Einlagern/Auslagern **dadurch gekennzeichnet ist, dass** sie ferner jeweils an einen Zuführroboter (110) ankoppelbare geschachtelte Wagen (114) umfasst, die jeweils eine Platte (115) aufweisen, die in der Lage ist, ein Packstück zu tragen, wobei diese geschachtelten Wagen unterschiedliche Höhen und Breiten aufweisen derart, dass sie der eine in dem anderen auf einem selben Lagerplatz (102) einpassbar sind, und dass sie ferner am Rande des Geschossdurchbruchs (150) eine Vorrichtung (160) zum automatischen Entladen umfasst, die wenigstens einen Abstreifarm (162) umfasst, der in der Lage ist, die Platte (115) des ein Packstück (102) tragenden geschachtelten Wagens (114) abzustreifen, um dieses Packstück in den Geschossdurchbruch (115) unter einer Relativverlagerung des Wagens und des Abstreifarms fallen zu lassen.

2. Zelle zum Einlagern/Auslagern nach Anspruch 1, **dadurch gekennzeichnet, dass** sie mehrere Boden-Etagen (105) umfasst, wobei die Geschossdurchbrüche (150) der Böden von demselben vertikalen Förderer (170) entleert werden.

3. Zelle zum Einlagern/Auslagern nach Anspruch 2, **dadurch gekennzeichnet, dass** der vertikale Förderer (170) ein schraubenförmiger Förderer ist.

4. Zelle zum Einlagern/Auslagern nach einem der Ansprüche 2 oder 3, **dadurch gekennzeichnet, dass** der vertikale Förderer (170) ein Schwerkraftförderer ist.

5. Logistikplattform (200) zur Verarbeitung von Packstücken, **dadurch gekennzeichnet, dass** sie wenigstens eine Zelle (100) nach einem der vorhergehenden Ansprüche und auf dem Grund (205), unter dem Geschossdurchbruch (150), ein Transportmittel (260) für Packstücke (102), das in der Lage ist, seriell die von dem Geschossdurchbruch stammenden Packstücke zu einem auf dem Grund (205) stationierten Transportfahrzeug (255) zu transportieren, umfasst.

6. Logistikplattform nach Anspruch 5, **dadurch gekennzeichnet, dass** sie mehrere benachbarte Zellen (100) mit einem gemeinsamen Boden (105) und mehrere Geschossdurchbrüche (150) in dem gemeinsamen Boden und auf dem Grund, unter den Geschossdurchbrüchen, mehrere Transportmittel (260) für Packstücke, die in der Lage sind, mehrere auf dem Grund stationierte Transportfahrzeuge (155) zu bedienen, umfasst.

7. Logistikplattform nach Anspruch 5 oder 6, **dadurch gekennzeichnet, dass** sie einen Versorgungseingang (208) für Packstücke (102) mit einem Identifikationsmittel (140C) von jedem Packstück zum Liefern einer Adressinformation der postalischen Verteilung umfasst, und dass die Regel-/Steuereinheit (120) ausgebildet ist, um ausgehend von den Adressinformationen der in den Lagerplätzen (102) einer Zelle (100) gelagerten Packstücke (102) die Zuführroboter (110) derart zu steuern, dass sie die Packstücke in den Geschossdurchbruch (150) der Zelle gemäß einer bestimmten Abfolge der postalischen Verteilung der Packstücke entladen, die einer Beladeabfolge der Packstücke in das oder die Transportfahrtzeuge (155) entspricht.

## Claims

1. A storage-and-retrieval cell (100) for a parcel-handling logistics platform for handling parcels with a view to delivering them, said storage-and-retrieval cell including an upper floor (105) and autonomously movable shuttle robots (110) that move incoming parcels (112) so as to position them in storage locations (102) under the remote control of a monitoring and control unit (120), said unit further being designed to control said shuttle robots in such a manner that they retrieve said parcels (112) from the locations in sequence, in which storage-and-retrieval cell said storage locations (102) are distributed over said upper floor (105) in such a manner as to form, firstly, two rows (130A, 130B) of storage locations (102) that face each other and that extend in mutually parallel manner along a longitudinal direction (L), and, secondly, four half-rows (132A, 132B, 132C, 132D) of storage locations that are disposed back-to-back and in pairs, the two pairs of half-rows extending in alignment with each other in said longitudinal direction between said two rows (130A, 130B) of storage locations, said rows and half-rows of locations defining travel aisles (135AC, 135BD) between them on said upper floor (105) for the shuttle robots to travel during storing and retrieval of parcels, and in which storage-and-retrieval cell a vertical travel hopper (150) for parcels is open in the upper floor (105) between one pair of back-to-back half-rows (132A, 132B) and the other pair of back-to-back half-rows (132C, 132D), said hopper being designed to allow said parcels to pass through it vertically while they are being unloaded in sequence into it using said shuttle robots under the control of said unit during retrieval, said storage-and-retrieval cell being **characterized in that** it further includes nesting trolleys (114) each of which is suitable for being hitched to a shuttle robot (110) and has a deck (115) suitable for carrying a parcel, said nesting trolleys being of different heights and widths in such a manner as to be suitable for nesting together in the same storage location (102), and **in that**, at the edge of said hopper (150), said storage-and-retrieval cell further includes an automatic unloading device (160) having at least one sweeper arm (162) suitable for sweeping the deck (115) of a nesting trolley (114) carrying a parcel (112) so as to cause said parcel to fall into the hopper (150) under the effect of relative movement of the trolley and of the sweeper arm.

2. The storage-and-retrieval cell according to claim 1, **characterized in that** it includes a plurality of upper floor levels (105), the hoppers (150) of said upper floors being served by the same vertical conveyor (170).

3. The storage-and-retrieval cell according to claim 2, **characterized in that** said vertical conveyor (170) is a helical conveyor.

4. The storage-and-retrieval cell according to claim 2 or claim 3, **characterized in that** said vertical conveyor (170) is a gravity conveyor.

5. A parcel-handling logistics platform (200), **characterized in that** it includes at least one cell (100) according to any preceding claim, and, on the ground floor (205), under said hopper (150), a parcel transporter (260) that is suitable for transporting said parcels (112) coming from said hopper in series towards a transport vehicle (255) parked on the ground floor (205).

6. The logistics platform according to claim 5, **characterized in that** it includes a plurality of adjacent cells (100) with a common upper floor (105) and a plurality of hoppers (150) in the common upper floor, and, on the ground floor, under said hoppers, a plurality of parcel transporters (260) suitable for serving a plurality of transport vehicles (155) parked on the ground floor.

7. The logistics platform according to claim 5 or claim 6, **characterized in that** it includes a feed inlet (208) via which parcels (102) are fed and which is provided with identification means (140C) for identifying each parcel so as to provide postal delivery address information, and **in that** said monitoring and control unit (120) is arranged so that, on the basis of the address information of the parcels (102) stored in the storage locations (102) of a cell (100), said monitoring and control unit causes said shuttle robots (110) to unload said parcels into the hopper (150) of the cell in a certain postal delivery order in which the parcels are to be delivered that corresponds to a parcel loading order in which the parcels are loaded into the transport vehicle(s) (155).
